**Europäisches Patentamt**

**European Patent Office**

**Office européen des brevets**

(19)

(11) Veröffentlichungsnummer: **0 312 042**
**A1**

## (12) EUROPÄISCHE PATENTANMELDUNG

(21) Anmeldenummer: 88116997.3

(22) Anmeldetag: 13.10.88

(51) Int. Cl.⁴: **B65G 67/20**

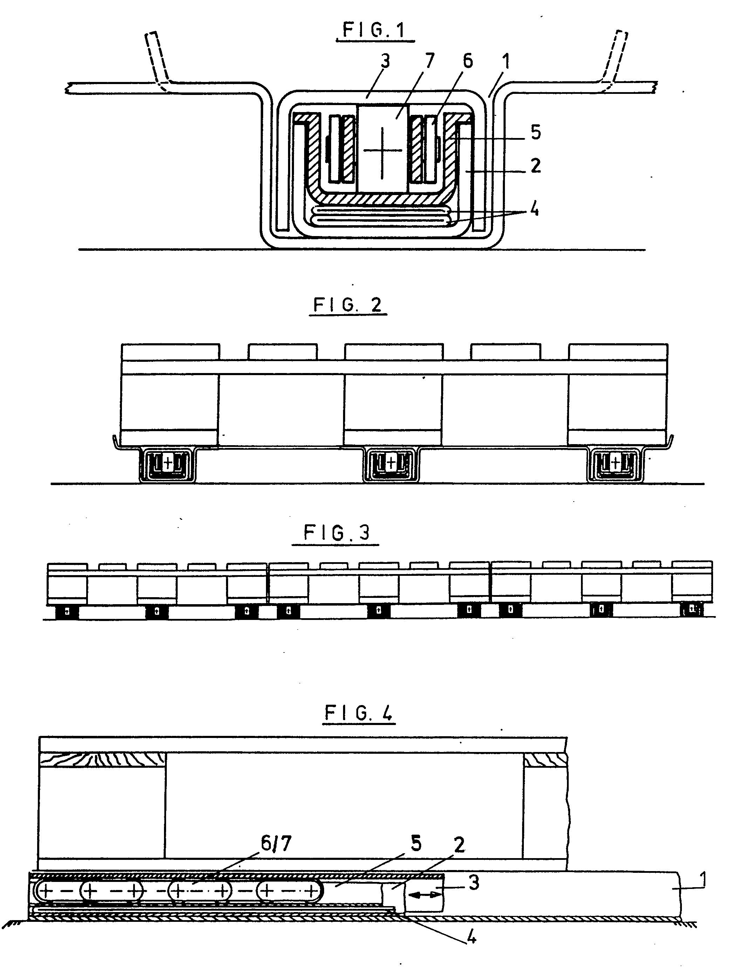

Ein Antrag gemäss Regel 88 EPÜ auf Hinzufügung der Zeichnungen (Fig. 1-4) liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 14.10.87 DE 3734777

(43) Veröffentlichungstag der Anmeldung:
**19.04.89 Patentblatt 89/16**

(84) Benannte Vertragsstaaten:
**FR GB IT**

(71) Anmelder: **Schindele, Reinhard**
**Gottlieb-Daimler-Strasse 22**
**D-8939 Bad Wörishofen(DE)**

(72) Erfinder: **Schindele, Reinhard**
**Gottlieb-Daimler-Strasse 22**
**D-8939 Bad Wörishofen(DE)**

(54) **Pneumatischer Hubbalkenförderer für Transfer- und Ladeaufgaben.**

(57) Ein Pneumatischer Hubbalkenförderer (1) insbesondere für das Beund Entladen von Transportfahrzeugen mit Paletten, Kisten, Fässern und ähnlichem durch Anheben und rythmisches Fördern kann mit sehr kleiner Bauhöhe so auf Ladeflächen von Transportfahrzeugen oder auf Bereitstellungsflächen installiert werden, daß die Ladeflächen auch herkömmlich benutzbar sind und ist insbesondere geeignet komplette Ladungen in ein Fahrzeug oder aus einem Fahrzeug zu verbringen indem mehrfach in Kanälen angeordnete Hubschienen (3) auf den Stützrollen (7) von Laschenketten (6) wälzgelagert unter den über den Kanälen aufliegenden Stückgütern vor und zurück bewegt werden und jeweils zum Fördern im Hin- oder Rückhub die, die Ketten (6) aufnehmenden Schienen (3) durch Aufpumpen von darunter liegenden Flachschläuchen (4) angehoben werden um sie nach Beendigung des Förderhubes wieder zu entlüften für einen Leerhub der Hubschienen (3).

FIG.1

## Pneumatischer Hubbalkenförderer für Transfer- und Ladeaufgaben.

Die Erfindung bezieht sich auf einen pneumatischen Hubbalkenförder für Transfer- und Ladeaufgaben nach dem Oberbegriff des Anspruchs 1.

Unter US-PS 46 84 311 ist ein Hubbalkenförderer bekannt geworden, mit Kanälen in welchen Flachschläuche, wenn aufgeblasen, Laufschienen so weit anheben, daß darüber angeordnete lastaufnehmende Schienen mit jeweils einer größeren Zahl darin gelagerter Rollen die darüber befindliche Last bewegen können. Die beschriebene Anordnung ist jedoch anfällig für Störungen.

So ist die profilierte Laufschiene nicht gegen das Eindringen von störendem Schmutz geschützt. Die Lager der Laufrollen erfordern Wartung und eine Mindestgröße der Laufrollen und damit eine Bauhöhe der Konstruktion, die einer Nutzung der Ladefläche auf konventionelle Art im Wege ist.

Die schlechte Seitenführung der Konstruktion im gesamten Hubbereich läßt ebenfalls Störungen erwarten. Die Flachschläuche werden von den Laufschienen auch im entlüfteten Zustand belastet. Sie können dadurch leicht beschädigt werden und ohne Entfernen der Last auch nicht ausgetauscht werden.

Ausgehend von der geschilderten Problematik wurde der Erfindung die Aufgabe zugrunde gelegt, einen pneumatischen Hubbalkenförderer der im Oberbegriff dargestellten Art bei kleinstmöglicher Bauhöhe und geringem technischem Aufwand auch betriebssicherer zu machen.

Erfindungsgemäß wird diese Aufgabe durch die kennzeichnenden Merkmale des Anspruchs 1 gelöst.

Indem die Flanschen des lasttragenden Stützprofiles mit der vollen Höhe in den Kanal hineinragen, wird dieses im abgesenkten wie im angehobenen Zustand seitlich gut geführt und verhindert das Eindringen von Schmutz in die Laufschiene. Die lasttragenden U-Profile ruhen auf den Stützrollen einer Laschenkette, die als einfaches Bauteil in den Laufschienen geführt, eine reibungsarme rollende Abtragung bei kleinstmöglicher Bauhöhe ohne die Notwendigkeit der Lagerung auf Achsen ermöglicht. Die Relativbewgung der Rollenkette zum lasttragenden U-Profil im Verhältnis von 1:2 stellt durch das begrenzte Hin- und Herbewegen desselben kein technisches Problem dar. Um die Betriebssicherheit zu erhöhen, sind die Flachschläuche zweifach vorgesehen. Eine vorteilhafte Weiterbildung der Erfindung ist im Anspruch 2 enthalten.

Die Kanten der Laufschienenflansche sind nach außen abgewinkelt und liegen auf den Kanten der Flansche des Hubbalken-Stützprofils auf. Dadurch sind die Flachschläuche im entlüfteten Zustand entlastet, so daß sie durch mechanische Belastung nicht beschädigt werden können. Sie sind außerdem zur Sicherheit zweifach vorgesehen und können auch bei aufliegender Last ausgewechselt werden.

Nachfolgend wird ein Ausführungsbeispiel der Erfindung anhand der Zeichnung erläutert. Es zeigen

Fig. 1 einen Querschnitt durch einen Hubbalken,

Fig. 2 drei Hubbalken längs unter einer Palette,

Fig. 3 neun Hubbalken längs unter drei Paletten,

Fig. 4 einen Längsschnitt durch einen Hubbalken.

Mit 1 ist in Fig. 1 ein Kanal bezeichnet, welcher Platz für ein lasttragendes U-Profil 3 bietet, welches mit den Flanschen nach unten darin geführt wird und zwischen den Flanschen einem weiteren U-Profil 2 mit den Flanschen und der Öffnung nach oben als Hubbalken-Stützprofil Platz bietet.

Im Hubbalken-Stützprofil 2 liegen endliche, an den Enden verschlossene und mit Anschlüssen zum Aufblasen und Entlüften versehene Flachschläuche 4 doppelt ein.

Ein mit 5 bezeichnetes U-Profil ist, mit den Flanschen und der Öffnung nach oben zeigend innerhalb des Stützprofils 2 angeordnet und dient als Laufbahn für eine Laschenkette 6 mit Stützrollen 7 auf welchen das lasttragende U-Profil 3 aufliegt und bei entlüfteten Flachschläuchen 4 mit seiner Oberseite etwas unter den Rändern des Kanals 1 liegt.

Mit den Stützrollen als Wälzkörper darunter kann das lasttragende U-Profil 3 mit kleinsten Reibungsverlusten in dem Hubbalken-Stützprofil hin und her bewegt werden auch wenn eine darüber abgestellte Last durch Aufblasen oder Aufpumpen der Flachschläuche 4 über das Niveau der Ränder des Kanals angehoben wird.

Indem die Laufschienen 5 mit Laschenkette 6/7 und lasttragenden Profil 3 die mehrfach in Kanälen wie in Fig. 2 und Fig. 3 dargestellt durch geeignete Linearantriebe hin und her bewegt werden, bedarf es nur des rythmischen Aufpumpens und Entlüftens der Flachschläuche 4 im jeweils richtigen Zeitpunkt, um die aufliegende Last jeweils ein Stück in die eine oder andere Richtung zu fördern.

## Ansprüche

1. Pneumatischer Hubbalkenförderer für Transfer- und Ladeaufgaben mit unter dem zu fördernden Gut in nach oben offenen Kanälen angeordneten Hubbalken, wobei jeder Hubbalken aus einem mit der Öffnung nach oben angeordneten U-förmigen Hubbalkenstützprofil besteht, in dem ein endlicher, an den Enden verschlossener und mit einem Anschluß zum Aufblasen und Entlüften ausgestatteter Flachschlauch liegt, welcher zum Anheben einer im Hubbalkenstützprofil angeordneten Laufschiene dient, auf der sich ein mit seinen Flanschen nach unten weisendes lasttragendes U-Profil rollend abstützt, wobei die Oberseite des lasttragenden U-Profils im abgesenkten Zustand ein niedrigeres Niveau hat als die Ränder des Kanals um bei entlüftetem Flachschlauch unter einem auf den Rädern des Kanals aufliegenden Fördergut leicht hin- und her bewegt und bei jeweils aufgeblasenem Flachschlauch mit darauf ruhendem wenig angehobenem Fördergut gezielt ein Stück in die gewünschte Förderrichtung bewegt werden zu können und das Fördergut über die gesamte Länge des Hubbalkenförderers dadurch gefördert wird, daß die Flachschläuche der mehrfach oder einzeln unter dem Fördergut befindlichen Hubbalken jeweils dann aufgeblasen werden, wenn die lasttragenden U-Profile sich periodisch in die jeweils gewünschte Förderrichtung bewegen und entlüftet werden um das Fördergut abzusetzen bevor und wenn sich die lasttragenden U-Profile in Rückhub befinden gekennzeichnet dadurch, ·
daß zwischen den Flanschen des Hubbalken-Stützprofils (2) und den Seitenwänden des Kanals (1) ein Zwischenraum bleibt, in welchen die Flansche des lasttragenden U-Profils (3) nach unten hineinragen und von den Flanschen des Hubbalkenstützprofils (2) seitlich geführt und der Raum zwischen Hubbalken-Stützprofil (2) und lasttragendem U-Profil (3) gegen Verschmutzung geschützt wird, daß die Laufschiene (5) als nach oben offenes U-Profil ausgebildet ist, welches zwischen den Flanschen des Hubbalkenstützprofils (2) seitlich geführt wird und eine einliegende Laschen-Kette (6) mit Stützrollen (7) trägt und seitlich führt, auf der das lasttragende U-Profil (3) mit der Innenseite seines Steges aufliegt, und daß ein zweiter Flachschlauch (4) vorhanden ist, der bei Ausfall des ersten Flachschlauches dessen Funktion übernimmt.

2. Pneumatischer Hubbalkenförderer für Transfer- und Ladeaufgaben nach Anspruch 1 dadurch gegekennzeichnet, daß die Flansche der Laufschiene (5) nach außen abgewinkelt sind und im abgesenkten Zustand der Laufschiene (5) auf den Kanten der Flansche des Hubbalkenstützprofils (2) aufliegen, wobei zwischen Hubbalken-Stützprofil (2) und Laufschiene (5) ein genügender Freiraum für die entlüfteten Flachschläuche (4) verbleibt um diese vor Druckbelastung zu schützen.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 404 581 (A. EISGRUBER)<br>* Seite 4, Zeile 12 - Seite 6, Zeile 28; Figuren *<br>--- | 1,2 | B 65 G 67/20 |
| A | US-A-3 437 219 (C.H. STEVENSON)<br>* Spalte 8, Zeilen 37-43; Figur 9 *<br>--- | 1,2 | |
| A | US-A-3 757 931 (T.M. BAKER)<br>* Zusammenfassung; Figuren *<br>----- | 1 | |

| | RECHERCHIERTE SACHGEBIETE (Int. Cl.4) |
|---|---|
| | B 65 G |

Der vorliegende Recherchenbericht wurde für alle Patentansprüche erstellt

| Recherchenort | Abschlußdatum der Recherche | Prüfer |
|---|---|---|
| DEN HAAG | 23-12-1988 | VAN ROLLEGHEM F.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes Dokument

EPO FORM 1503 03.82 (P0403)